Europäisches Patentamt

European Patent Office

Office européen des brevets

(11) Publication number: **0 224 762**
**A2**

## (12) EUROPEAN PATENT APPLICATION

(21) Application number: **86115636.2**

(22) Date of filing: **11.11.86**

(51) Int. Cl.⁴: **C02F 1/52** , C02F 1/24 ,
C02F 1/74

(30) Priority: **27.11.85 FI 854673**

(43) Date of publication of application:
**10.06.87 Bulletin 87/24**

(84) Designated Contracting States:
**AT BE CH DE FR GB IT LI LU NL SE**

(71) Applicant: **Insinööritoimisto LISOP OY**

**04201 Kerava(FI)**

(72) Inventor: **Järvenpää, Viljo Juhana**
**Vellamontie 21 as.6**
**04200 Kerava(FI)**

(74) Representative: **Grams, Klaus Dieter, Dipl.-Ing. et al**
**Patentanwaltsbüro Tiedtke-Bühling-Kinne-Grupe-Pellmann-Grams-Struif Bavariaring 4 D-8000 München 2(DE)**

(54) **Reaction cell.**

(57) The invention concerns a reaction cell wherein components present in a liquid can be precipitated and separated. Three phases (solid, liquid, gaseous) have been disposed to participate in the process taking place in a reaction tank (30) serving as reaction volume and which phases can react with each other directly or catalytically. The reactions have been disposed to take place mainly by mediation of an array of microbubbles, the solid matter that is formed and/or that is originally present in the liquid being separated by floatation with the aid of said array of microbubbles and/or with a vortex separator. The reaction tank (30) serving as reaction volume is conically tapering at least in its lower part (5), this part constituting a vortex separator.

FIG 1

## Reaction cell

The present invention concerns a reaction cell in which components present in a liquid can be oxidized/reduced with air or with another gas, the solid matter can be floatated and the unfloatable solids separated, the entire process taking place in one unit.

It is frequently necessary in processing effluents, and partly also in the handling of other industrial sludges, mixtures and compounds, to oxidize the mixture in order to precipitate and separate the solids. This is usually accomplished by blowing air under high pressure into the sludge water through nozzles which are finely perforated or made of a porous material. The endeavour is to produce an array of bubbles as finely distributed as possible and having a large reaction surface. However, said nozzles tend to become plugged very easily, and they require constant maintenance and consume much energy. Clarifying and sludge removal are carried out in a separate, frequently rather space-consuming unit, for instance a settling basin.

It is common practice in ore processing technology to use floatation equipment in which a rotor, usually horizontal, rotating in a tank admixes air in the form of fine bubbles to the ore suspension. By adding appropriate foaming agents, the desired ore particles can be made to adhere to the air bubbles, and the concentrate foam thus obtained can be recovered by skimming. No chemical reactions take place in the floatation process.

Separation of coarser solid material from a liquid represents technology known in itself in the art, and to this purpose settling basins and various types of dynamic separators, among others, are used.

However, what would be needed in the processing of effluents and other industrial sludges is a small, compact and energy-saving means which could effect a chemical reaction, such as oxidation/re duction, and at the same time could separate both the finely divided and the coarser solids.

The object of the invention is to provide such a means. With a view to attaining the object, the invention is characterized by the features stated in the claims.

The invention is now more closely described with reference to the attached drawings, which represent, schematically:-

Fig. 1 -an embodiment of the invention in elevational view, and sectioned.

Fig. 2 -the rotor component of the preceding, on a larger scale, in elevational view and partly sectioned.

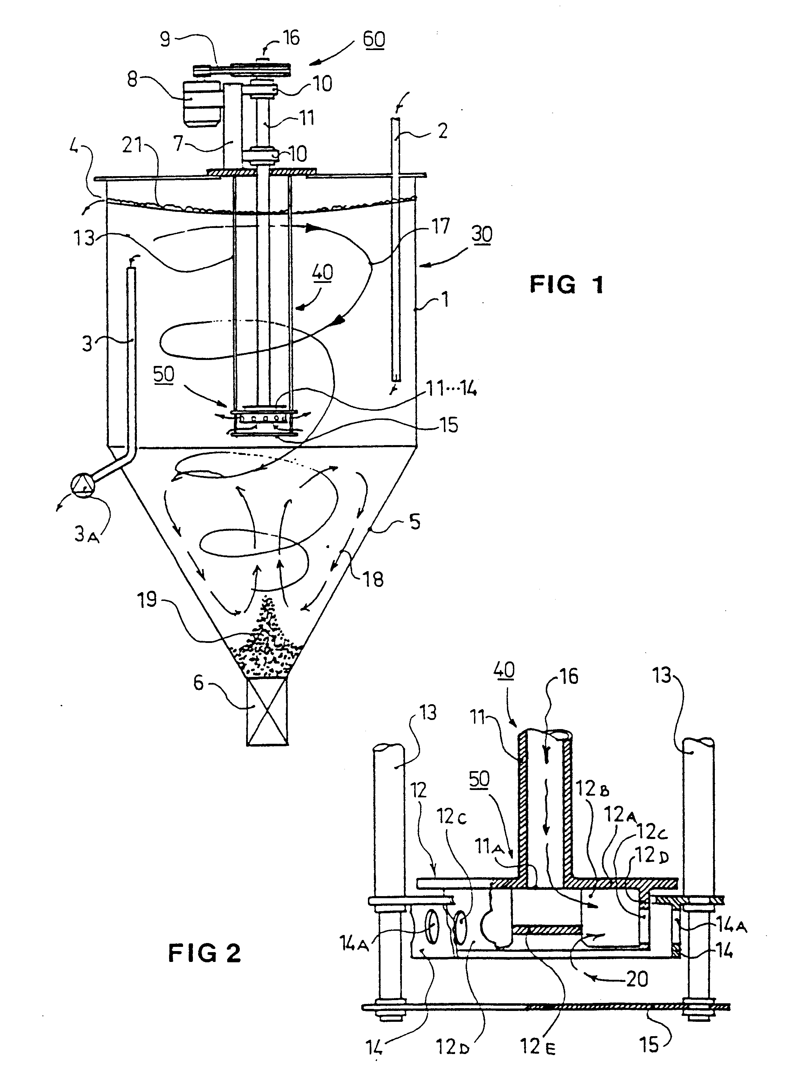

The main parts of the reaction cell depicted in Fig. 1 are the reaction tank 30 and the rotor unit 40. The upper part of the reaction tank 30 is a vertical cylinder 1, to which attach the sludge input pipe 2 and the liquid draining pipe 3, with pump 3A. Topmost is located the foam removal aperture 4, or another foam removing member. The lower part of the reaction tank 30 consists of a cone 5, at the lower end of which a precipitate removal member 6, for instance a valve, is located.

The rotor unit 40, constituting a separate entity, contains the floatation/mixer part 50, presented in greater detail in Fig. 2, and the drive means 60, the latter consisting of a frame part 7, a motor 8, a V-belt drive 9 and a bearing arrangement 10.

The floatation/mixer part 50 comprises an impeller, or rotor, 12 rotating carried by a vertical, hollow shaft 11, and an annular stator 14 with flow apertures 14A, attached to supporting rods 13, and which encircles the outer periphery of said rotor. Below the rotor is provided, supported by the supporting rods 13, a flow guide baffle 14. The rotor 12 consists of a circular base disk 12A and radial vanes 12B. Moreover, the rotor carries immediately outside the vanes 12B, a cylindrical ring 12D provided with apertures 12C and inside the vanes 12B, a circular flow inhibitor plate 12E parallelling the base disk 12A.

The cell as depicted in Fig. 1 has the character of a chemical reactor by which, for instance, effluents or industrial sludges are processed in that an oxidizing, reduction or other chemical reaction is carried out, whereby dissolved substances can be caused to precipitate. The process is performed using micro-bubbles, whereby all three phases - (solid, liquid, gaseous) can efficiently react with each other. The second task of the microbubble array is, by floatation according to a technique known in itself in the art, to separate the finely divided solid matter that has thus been produced and/or which was originally present in the liquid. The coarser material is simultaneously separated by applying the vortex separator principle.

The sludge to be processed enters by the input pipe 2 the cylindrical upper part 1 of the reaction tank 30, serving as reaction volume proper, below the liquid level. The rotating floatation/mixer part 50, of which the operation shall be described in detail later on, draws through its hollow shaft 11 air 16, or another gas, mixing it, to become a finely divided array of bubbles, with the other contents of the tank 1. For instance, when the gas is air 16 and the sludge that is being processed is oxidizable, the desired oxidizing reaction takes place rapidly through the microbubble array which has a large active surface area. The reaction time may be further prolonged, if required, by adding to the process surface-active agents, which improve the stability of the bubbles.

The bubbles rise gradually upward in the liquid (the suspension) in the tank 1, and it is possible by using foaming agents known in themselves in the art to make the finely divided substances adherent to the bubbles. The foam that has accumulated on the free surface is recovered with a foam removing member 4, which in its simplest form is merely an aperture in the wall of the tank 1. The liquid level is kept at constant height by drawing off liquid through the drain tube 3, with the aid of the pump 3A, in a quantity equivalent to the input.

The floatation/mixer rotor 12 also produces a rotary motion 17 of the contents of the reaction tank 30, about the central axis. The lower part 5 of the tank is thereby converted into a vortex separator, known in itself in the art. The differential pressures arising between the central region and the outer periphery from the rotary motion 17 of the liquid cause a secondary flow 18, the coarser solids accumulating along with this flow on the bottom of the conical lower part 5, forming a conical heap 19, and being removed through the valve member 6. In order to increase the separation power, the secondary flow 18 is pacified with the aid of the guide plate 15. This plate deflects the flow 18, ascending in the central region, to the sides and thereby inhibits the direct suction effect of the rotor 12.

The operation of the floatation/mixer part 50 is explained by Fig. 2. When the rotor 12 is rotating, under-pressure is formed, in well-known manner, on the trailing surface of the vanes 12B, this under-pressure drawing not only liquid from below the rotor 12 but also air 16 through the hollow shaft 11. The flow inhibition disk 12E directs the liquid 20 flowing to the rotor from straight below, away from the centre. Hereby the liquid flow 20 cannot impede the air flow 16 by impinging against the air intake aperture 11A; on the contrary, the liquid jets directed to the sides entrain air 16 along with them. The turbulent flow and the pressure fluctuations immediately mix the liquid/air mixture to a foam with fine bubbles, this foam being flung by the end face of the vanes 12B through the apertures 12C in the rotor ring 12D and further through the apertures 14A in the stator ring 14, into the reaction volume 1. The pulsating fluctuation of pressure and velocity at the apertures 12C and 14A, and in the intervening space, reduce the bubble size still further and homogenize the mixture. At the same time, the rotary motion of the rotor 12 produces a flow 17 circulating in equivalent direction, among the contents of the reaction tank 30, whereby vortex separation of the coarse solids can take place in the way already described, without any other source of energy.

The embodiment example just described demonstrates that according to the invention can be implemented a simple, versatile and energy-economic reaction cell. Achievement of an equivalent result by procedures of prior art would require rather extensive apparatus which would have substantially greater energy and space requirements. The invention is not confined to the embodiment here described: it may vary within the scope of the claims following below.

## Claims

1. A reaction cell wherein components present in a liquid can be precipitated and separated, characterized in that three phases (solid, liquid, gaseous) have been disposed to participate in the process taking place in a reaction tank (30) serving as reaction volume and which phases can react with each other directly or catalytically, and that the reactions have been disposed to take place mainly by mediation of an array of microbubbles, the solid matter that is formed and/or that is originally present in the liquid being separated by floatation with the aid of said array of microbubbles and/or with a vortex separator.

2. Reaction cell according to claim 1, characterized in that the reaction tank (30) serving as reaction volume is conically tapering at least in its lower part (5), which part constitutes a vortex separator.

3. Reaction cell according to claim 1 or 2, characterized in that at least one rotary rotor (12) which at the same time supplies the kinetic energy required by the vortex separator has been disposed to form, and to admix to the contents of the reaction volume, an array of microbubbles.

4. Reaction cell according to any one of the preceding claims, characterized in that the rotor - (12) rotating in the liquid has been disposed to draw gas (16) through its hollow shaft (11), and that to the vanes (12B) of the rotor (12) at a distance from the aperture (11A) of said hollow shaft (11) has been attached a disk (12E), or another member, which prevents the liquid simultaneously drawn by the rotor (12) from impinging on the aperture (11A) and thereby impeding the flow of gas (16).

5. Reaction cell according to any one of the preceding claims, characterized in that the outer periphery of the rotor (12) consists of a ring (12D) provided with apertures (12C), and that outside the rotor (12) has at the corresponding location been placed a stationary ring, likewise provided with apertures (14A).

6. Reaction cell according to any one of the preceding claims, characterized in that below the rotor (12), at a distance therefrom, has been placed a plate (15), or another member, which inhibits liquid flow from directly below to the rotor (12).

FIG 1

FIG 2